(19) Europäisches Patentamt
European Patent Office
Office européen des brevets

(11) **EP 2 150 353 B1**

(12) **EUROPEAN PATENT SPECIFICATION**

(45) Date of publication and mention
of the grant of the patent:
**23.08.2017 Bulletin 2017/34**

(21) Application number: **08753869.0**

(22) Date of filing: **30.04.2008**

(51) Int Cl.:
*B04C 7/00* (2006.01)          *B04C 9/00* (2006.01)
*B03C 3/15* (2006.01)          *B03C 3/49* (2006.01)
*F01N 3/01* (2006.01)          *F01N 3/037* (2006.01)

(86) International application number:
**PCT/PT2008/000024**

(87) International publication number:
**WO 2008/147233 (04.12.2008 Gazette 2008/49)**

(54) **PROCESS OF ELECTROSTATIC RECIRCULATION FOR DEDUSTING AND GAS CLEANING AND DEVICE THEREOF**

VERFAHREN ZUR ELEKTROSTATISCHEN REZIRKULATION ZUR ENTSTAUBUNG UND GASREINIGUNG UND VORRICHTUNG DAFÜR

PROCÉDÉ DE RECYCLAGE ÉLECTROSTATIQUE DESTINÉ AU DÉPOUSSIÉRAGE ET À L'ÉPURATION DES GAZ ET DISPOSITIF ASSOCIÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.04.2007 PT 10372707**

(43) Date of publication of application:
**10.02.2010 Bulletin 2010/06**

(73) Proprietor: **Ribera Salcedo, Romualdo Luis P-4200-465 Porto (PT)**

(72) Inventor: **Ribera Salcedo, Romualdo Luis P-4200-465 Porto (PT)**

(74) Representative: **Pelayo de Sousa Henriques, Rui Rua de Sà da Bandeira, 706-6.o-D.to P-4000-432 Porto (PT)**

(56) References cited:
EP-B- 1 272 278          JP-A- 2006 180 937
US-A- 4 010 011          US-A- 4 066 526
US-A1- 2006 059 871          US-A1- 2006 059 874

## Description

### Technical domain

The present invention relates to a cyclone system with electrostatically enhanced recirculation and pertains to gas dedusting and cleaning devices. The invention also relates to the process corresponding to such system.

### State of the art

*Cyclones and recirculation*

Cyclones are dedusters used in many industries with two distinct aims: particulate removal from gaseous streams emitted by processes, before being released to the atmosphere (for air pollution control or for product recovery), or for use as reactors for gas cleaning by dry injection of appropriate reactants (absorbents), in this last case usually followed by bagfilters for recovery of reaction products and excess absorbent.

Industrial cyclones are of different types, but the ones most used are the so-called reverse-flow type.

Theoretically, one may increase cyclone efficiency by increasing gas entry velocity, but in practice there is a velocity limit beyond which collection efficiency decreases. This is due to saltation (Licht, 1980), phenomenon that resembles sand saltation in dunes due to excessive winds.

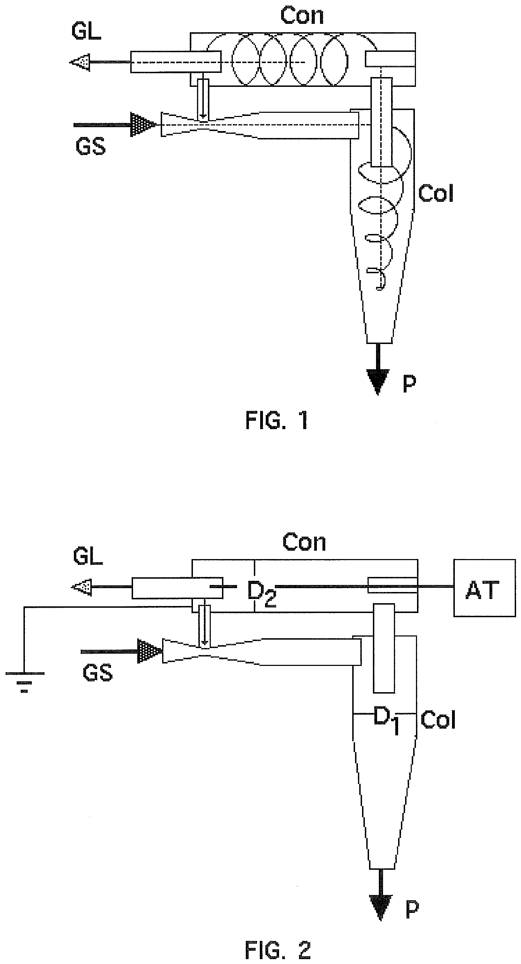

To reduce or even eliminate saltation, a proposal was put forward using partial recirculation of gas and uncaptured particles (as referred in the family of patents PT102392, WO0141934, US6733554, CA2394651 and EP1272278). These systems use recirculating cyclones for dedusting and gas cleaning - they are composed by a reverse-flow cyclone (collector) and by a straight-through recirculating cyclone (concentrator), arranged in series and with recirculation - characterized by the collector being upstream from the concentrator and by a recirculation loop that recirculates part of the gas being treated from the concentrator back to the collector, with the recirculation made by a venturi, blower or ejector (Fig. 1). These systems, employing the above principle of operation, are already in use at various industries (Salcedo and Pinho, 2002, 2003; Salcedo and Sousa Mendes, 2003: Salcedo et al., 2004), and are able to remove all particles above about 10 $\mu$m.

These systems have a global efficiency given by:

$$\eta = \frac{\eta_{col}}{1 - \eta_{con} + \eta_{con}\eta_{col}} \qquad [1]$$

where $\eta_{col}$ and $\eta_{con}$ are respectivelly the efficiencies of the collector and the concentrator.

It is thus verified that the efficiency of a cyclone or a multicyclone (several cyclones in parallel) can be increased by recirculation and, in particular, with a system comprising a reverse-flow cyclone (collector) upstream from a straight-through cyclone (concentrator).

*Electrofilters*

Since the beginning of last century (White, 1963) there exists a kind of deduster designated as electrostatic precipitator (commonly known as ESP) that use electric forces generated by a discharge from a conductive wire connected to a high-voltage (HV) power supply, generally of direct current (dc), located symmetrically in the axis of a cylinder (tubular ESP) or at mid distance from parallel plates (parallel plate ESP). Both cylinder and parallel plates are grounded, and the generated electric field is responsible for particle charging, the majority of particles acquiring charge of the same polarity as that of the discharge wire. These particles, in their trajectory throughout the ESP, are thus attracted by the cylinder or by the collector plates, of opposite polarity to the discharge wire, being there captured and later removed by pneumatic hammers or vibrating devices, or even by an appropriate washing liquid (Oglesby and Nichols, 1978; Parker, 1997), falling in hoppers from where they are transported at a later stage.

An ESP thus needs:

- one discharge electrode of <u>reduced curvature</u> (to achieve gas ionization at moderate voltages, of the order of 10-20 kV, depending on the temperature and composition of the flue gas), electrically insulated from the rest of the equipment and connected to a high voltage power supply, generally of direct current (dc) up to 70 kV;
- one collection electrode of <u>large curvature</u> (cyclinder or parallel plates), grounded to earth and thus creating a large potential difference in relation to the discharge electrode;
- one system to wash, vibrate or hammer the collection electrode to remove, by gravity, the deposited dust;

- one system of dust hoppers to collect and transport the dust out of the ESP cage.

In the case of tubular ESPs, of cyclindrical or similar geometry (e.g. hexagonal cross-section), dust is usually removed from the walls by washing with an appropriate liquid, to eliminate particle reentrainment in the gas stream, and so these ESPs are always vertical, with the flue gas entering at the bottom and leaving at the top (White, 1963; Oglesby and Nichols, 1978; Parker, 1997). In the case of parallel plate ESPs, the use of washing liquids to remove particles is less common, but the plates are also always vertical.

For a tubular ESP to work successfully, according to the traditional way, i.e. as a particle collector device, it is necessary that the following factors occur simultaneously:

1. An appropriate high-voltage (HV) dc source must be available, which in practice corresponds to the use of lower voltages at around 60-70 kV (Parker, 1997);

2. The discharge electrode must have a reduced radius of curvature that corresponds, for cylindrical wires, to the use of 1-3 mm diameter cylindrical wires. In practice, 2-3 mm wires are employed (Parker, 1997). The smaller the discharge wire diameter, the lower the corona onset voltage for the gas (White, 1963; Parker, 1997), but the electric field near the collecting electrode will decrease, thus decreasing somewhat the collection efficiency;

3. The collection electrode must have a large radius of curvature, which in practice corresponds to the use of cyclindrical or hexagonal chambers, vertically disposed, where the gas enters at the bottom and exits at the top;

4. There must be a correct spacing between the discharge and collection electrodes, to produce high-strength electric fields ($\approx 5 \times 10^5$ V/m) and high migration velocities of particles towards the collection electrode ($\approx 0.1$-1 m/s for particle diameters between 0.1-10 $\mu$m; Parker, 1997), with common spacings in tubular ESPs between 150-250 mm;

5. There must be a sufficient residence time (large length of collection electrode, or, in alternative, low gas velocity of the flue gas to be treated), which, in practice, results in average gas velocities of the order of 1.5-2.5 m/s;

6. There must be some ancillary means to remove deposited particles on the walls, namely through vibration, hammering or washing the walls, and the particles must be collected at the base of the cylindrical ESP;

7. The particles must possess apropriate electrical properties, in particular with respect to its electrical resistivity (a measure of the charge removal rate from the deposited dust layer on the collection electrode), and it can neither be too low (<$10^6$ Ohm·m), to avoid a very fast discharge and particle reentrainment in the flue gas, nor too high (>$10^9$ Ohm·m), to avoid the establishment of very large electric fields in the deposited dust layer (White, 1963; Salcedo, 1981), since both these phenomena will decrease collection efficiency.

There are also reverse-flow cyclones (without any recirculation system) that have been directly electrified (Lim et al., 2001; Shrimpton and Crane, 2001; Lim et al., 2004), with the electric field present in the reverse-flow cyclone itself, with the objective of increasing its collection efficiency (which, in Eq. [1] is $\eta=\eta_{col}$).

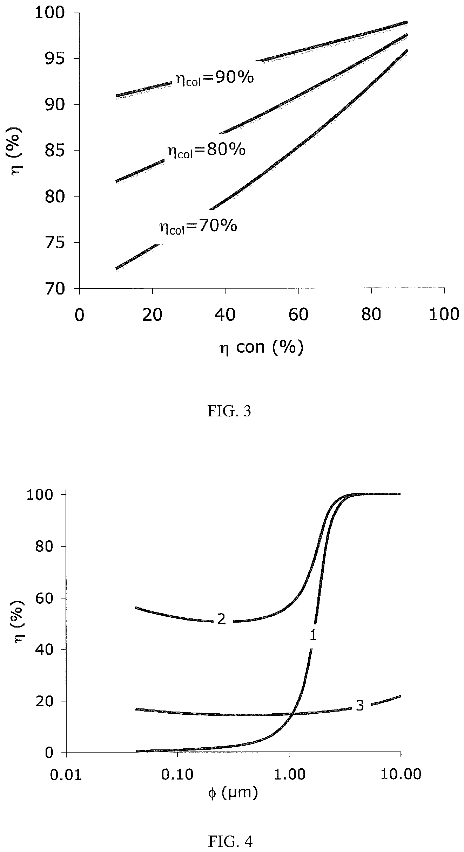

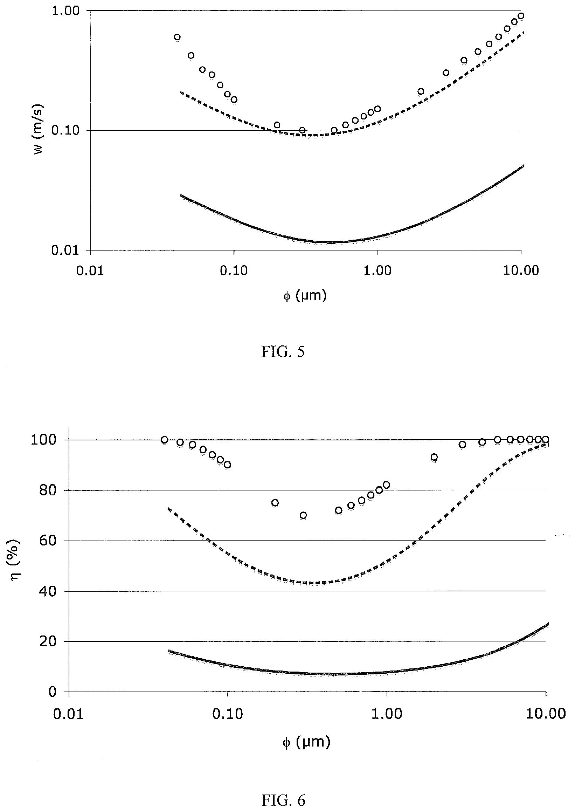

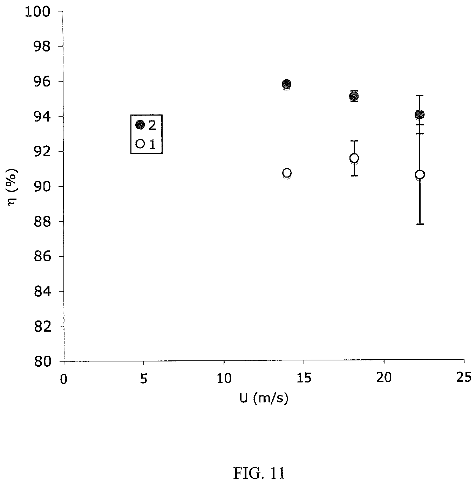

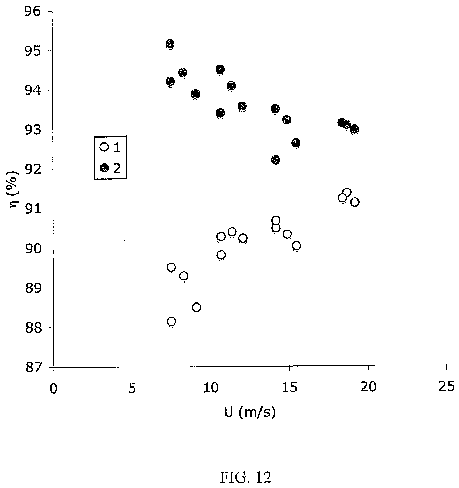

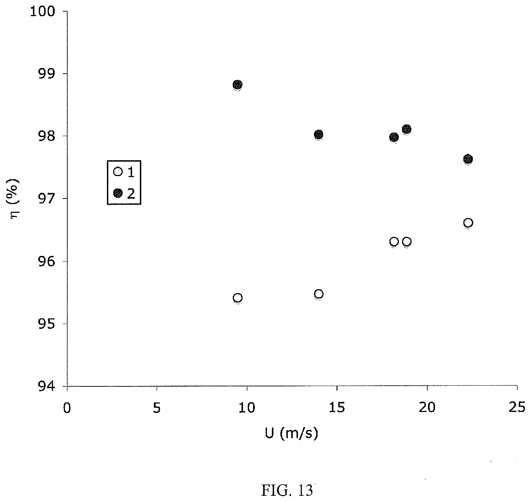

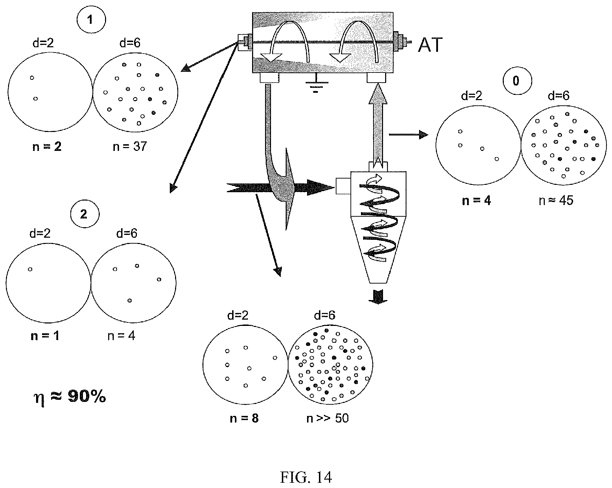

One example of this last concept is described in patent US6355178 B1. In particular, looking at Figs. 4 and 5 of such patent and corresponding description, a reverse flow cyclone for gas dedusting is described, wherein a buffer zone separates the upper zone from the bottom zone. A differential voltage is applied to these two zones, with the objective of charging the particles in the upper zone and of capturing them in the lower zone wall. According to two different variants described in Figs. 11 and 15 of such patent, there is a particle precharger upstream from the cyclone collector (reverse-flow cyclone), where the entire flue gas passes. Again, the objective is to capture the particles in the reverse-flow cyclone walls. In a particular arrangement (shown in Fig. 13 of the same patent), the upper part of the vortex tube is used to precharge the particles entering the cyclone; in another arrangement (shown in Fig. 12 of the same patent), the precharger is a discharge electrode inserted longitudinally in the admission pipe. Again, the objective is to capture the particles in the reverse-flow cyclone walls. Finally, in a third arrangement (shown in Fig. 14 of the same patent), the discharge electrode (a wire) is located on the cyclone longitudinal axis. The alternatives and devices discussed above usually imply the use of ancillary devices for vibrating the cyclone (by mechanical, pneumatic or electrical means), eventually complemented with vibrating means using sound waves or ultrasounds, in both cases to allow for particle removal from the cyclone walls. Examples of these ancillary means are represented in Figs. 16 and 17 of the same patent. Apart from the inconvenient of having to resort to these complimentary means of vibration, since the particles are captured in the cyclone walls, it is a fact that with the alternatives depicted in Figs, 13 and 14 of such patent US6355178, the effect of the particle charging devices is expected to be very small, since, for the usual dimensions of a cyclone, the charging devices do not have the sufficient length to assure significant particle charging. In the case of the third configuration referred above, the exposed part of the discharge wire cannot be too close to the cyclone bottom, since arching will be produced between the discharge wire and the cyclone wall. Increasing the lengths (or heights) of the discharge elements, to increase particle charging, will proportionately increase cyclones to much encumbering sizes or lead to a geometry far from high-efficiency cyclones, and thus, intrinsically less efficient. Furthermore, one does not know of any application of such devices for solving industrial dedusting problems (and not merely at laboratory or pilot-plant scales).

*Agglomerators*

Patent US4718923 pertains to an electrostatic agglomerator for soot particles in a flue gas, to increase particle size (by promoting interparticle agglomeration) and their subsequent removal by a centrifugal device, such as a cyclone.

The entire gas stream passes first through electrostatic agglomerators, in a configuration with electrostatic tube agglomerators in parallel, and next (also the entire gas flowrate), through centrifugal collectors, such as a parallel arrangement of cyclones (eventually of the reverse-flow type). The cyclones are arranged in parallel and in correspondence with the agglomerating tubes and are located downstream from these. The agglomerating tubes are bipolar, and each comprises a discharge electrode located longitudinally, with transversal plates, connected to a negative polarity and electrically insulated from the tube itself, which in turn has positive polarity. A large potential difference is established between both poles. Although the physical principle underlying the operation of this device ie not described in the document, it is probable that particle agglomeration occurs first by particle deposition at the tube walls for a certain period, and next by releasing the agglomerated particles through some vibration or equivalent mechanical action. Be as it may, interparticle agglomeration with increase in size is the aftersought effect, as may be visualized from the figures of such patent.

Since centrifugal collectors are more efficient for the separation of larger particles (larger mass), the underlying idea to such a device is to cause an increase in the size of particles through agglomeration, before passing them through the centrifugal collector. The totality of the gas stream that enters the centrifugal collector (such as a reverse-flow cyclone) is previously processed by the agglomerator, located upstream from the collector. The cleaned gas, exiting from the centrifugal collector, is entirely exausted without any type of subsequent recirculation, either partial or total.

The same principle applies to the functioning and design of the device described in patent US5458850.

Patent US6004375 also pertains to a particle agglomerator. No recirculation is foreseen. As in the other agglomerators, the problem lies in agglomerating particles in a manner as to increase their dimension, in order to capture them more easily at a later stage. It is also intended to control the features of the agglomerated particles, both in terms of their concentration, and of their structure, and also in terms of the dimension of the agglomerated particles obtained. The device is bipolar and the electrodes are pairs of opposing needles set radially to the gas flow. It is prevented that, in case there is an incomplete combination of the inversely charged particles, such particles may suffer a deviation in the said radial direction.

*Scrubbers*

There are well known specific scrubbing devices that use dry injection of reacting powders, but that have high investment and operational costs (Carminati et al., 1986; Heap, 1996), when compared to cyclones that are used as reactors for the same purpose (Fonseca et al., 2001).

Patent literature

Besides the patent documents above mentioned it is deemed appropriate to further refer to US2006/0059874 A1 and US2006/0059871 A1.

US2006/0059874 A1 discloses a dust separator of a cyclone type cleaner, arranged vertically, and comprising a first dust separator connected to a suction pipe, for separating dust from air by a centrifugal force for the first time; a collecting container connected to a lower portion of the first dust separator and in which the dust separated in the first dust separator is collected; and a second dust separator, also arranged vertically, and connected to an upper portion of the first dust separator, by means of a pipe, for sucking air which has passed through the dust separation in the first dust separator and further separating dust from the air by a centrifugal force crated by an impeller which together with the motor thereof are both arranged inside the second dust collector. Dust separated in the second dust separator is circulated back to the first dust separator. There is a discharge pole inside the said pipe and there is a second discharge pole inside the upper portion of the second dust separator.

US2006/0059871 A1 discloses a cyclone dust collecting apparatus comprising a first cyclone for centrifuging dust from drawn-in air, said first cyclone having a central cylindrical grill member whose bottom is closed by a member that is not a grill and that substantially obstructs the interior of the body of said first cyclone dividing it into an upper chamber and a bottom chamber or space; and further comprising one or more second cyclones arranged as reverse-flow cyclones, for separating dust from air which is passed through the first cyclone; and an electrode unit mounted to at least one of the first and the second cyclones. The first cyclone is an atypical reverse-flow cyclone whose body does not present the typical form of a frustum of cone with the narrower part at the bottom. The inner walls of both the first cyclone and the one or more second cyclones have conductive members which are grounded. The same amount of voltage is applied to the first and second electrode members of the electrode unit, such voltage being in the range of 5KV to 10KV.

**Objectives of the invention**

The objective of the present invention is to provide a highly efficient process and device for gas-solid separation, showing a significantly increased efficiency - especially for removing particles of a diameter smaller than 10 μm - when compared to the devices described in document WO0141934.

It is also intended that such a device may efficiently operate with particles beyond the range of particle resistivity that is typical of ESPs, that is, outside the interval [$10^6$; $10^9$], expressed in Ohm·m, and be of simple construction, versatile and of low cost, especially when compared to ESPs, suppressing the need for devices for particle removal from the collector walls, existing in ESPs.

An additional objective is to have operational costs the same or even below those of the recirculating systems described in WO0141934.

Another objective is that the investment costs (production and assembly) be lower to those of the state of the art in terms of comparable collection efficiency, and that the device according to the invention may be used for dry cleaning and/or treatment of gases at high temperatures, and also that the encumbering be compatible for typical industrial applications and comparable to the size of the device described in WO0141934, without loss of possibility of changing the concentrator layout from vertical to horizontal, if layout limitations at the industrial site are imperative, contrarily to what happens in tubular ESPs.

It is also an objective of the proposed invention, to provide a highly efficient process for dedusting with a broad spectrum of applications, notably on the admissible resistivity range of the particles to be removed from gaseous streams.

It is a further objective of the proposed invention the acid dry gas cleaning and particulate removal from flue gases, and the efficient removal of particles from exhaust gases from diesel engines.

Additional objectives will appear from the remaining description and from the claims.

**Describing the invention**

Contrarily to agglomerators, whose principle is to cause the increase in particle size to enhance the subsequent collection capability in particle separators (notably on centrifugal dedusters), and contrarily to ESPs (or even electrified reverse-flow cyclones), whose principle is to separate the particles present in the gas stream and capture them on the very electrified device, the present invention implies a device similar to that of patent WO0141934 but in which the concentrator is designed as an electrostatic recirculator.

It is verified that, although the main components of the device are essentially the same as those of the state-of-the-art, with a reverse-flow cyclone (collector) placed upstream from a straight-through cyclone (concentrator), the inclusion of electrostatic recirculation, not with the objective of particle capture in the recirculator (straight-through concentrator), neither of promoting interparticle agglomeration, but rather with the objective of concentrating the particles in the recirculation stream back to the reverse-flow cyclone (the only collector), significantly increasing the term $\eta_{con}$ in Eq. [1], will allow significant improvements in the global efficiency ($\eta$), well above those of mechanical recirculation alone. This addition to the straight-through cyclone (concentrator), transforming it in an electrostatic recirculator, is schematically shown in Fig. 2.

Although in this schematic representation there is an apparent similarity between the electrostatic recirculator and a conventional cyclindrical ESP, this similarity is purely an illusion.

In fact, it would be extremely counterproductive to use the recirculator as an ESP, since particle capture in its walls should be minimized, or preferably none at all, while in ESPs it should be maximized. With electrostatic recirculation, the only objective is to clear the particles from the exaust channel located in the axis of the recirculator, making them approach the recirculator walls (without capturing them on such walls), so that they become concentrated on the tangential exit, which is the return loop to the reverse-flow cyclone (collector).

Thus, the recirculation efficiency may be enhanced by implementing a dc electric field in the recirculator (concentrator), as long as the discharge and collection electrodes are designed to prevent the recirculator from operating as an ESP, i.e., to prevent or minimize particle deposition in its walls.

Summarizing, one may say that, if the electrostatic recirculator as per the invention were to operate as an ESP, the (partial) recirculation of flue gases to the reverse-flow cyclone (collector) would become essentially useless. Furthemore, the device would inherit the disadvantages associated with ESPs outlined above, viz. the need of vertical placement (tubular ESPs), the need to provide for complex ancillary means for removing particles, and the limitation on the type of particles susceptible to be captured, in function of their electrical resistivity (usually limited to a relatively tight range).

On the other hand, the use of any electric field directly on the collector cyclone, as per patent US6355178 is inconvenient, due to the motives outlined above.

According to the innovative approach of the invention, one can obtain dedusters, comprised by cyclones, that are simultaneously more efficient than those existing in the marketplace, with similar investment and handling costs, confined to a limited size, and that may be used at very high temperatures or for dry gas cleaning, answering to ever stricter legal emission limits.

In order to achieve the main objective of increasing the collection efficiency of cyclone systems with recirculation, the invention resorts to electrical forces to concentrate particles that escape the reverse-flow cyclone (collector) near the recirculator walls, while minimizing particle deposition on such walls. This is achieved by means of a cyclone system according to claim 1. The stream concentrated in particles exits the recirculator tangentially, and the recycled gas fraction ($\approx$ 20 to 30%) is directed back to the collector cyclone.

The present invention also respects providing a process of increased efficiency for gas-solid separation, as well as a process of increased efficiency of dry gas cleaning from industrial flue gases.

According to the process of the invention, the flue gases enter a reverse-flow cyclone (collector), that captures a fraction of the incoming particles, and are next directed to a straight-through cyclone concentrator (recirculator), having a central channel for the exaust of the cleaned gases, where part of the particles remaining in the flow are concentrated and recirculated, with part of that flow, back into the collector cyclone. Such a process is characterized in that the particles entering the concentrator being directed away (deviated) from the central exhaust channel by a combination of mechanical (inertial) and electrical forces, the later being the result of the particles crossing an ionized high-tension electric field, said deviation leading to the concentration of the particles - without depositing them on the concentrator wall - in the part of the flow that is redirected to the reverse-flow cyclone , where some fraction of them gets collected. This is achieved by means of a process according to claim 4.

So, the increase in efficiency is obtained by increasing the fraction of particles that are recirculated back to the reverse-flow cyclone (collector). Thus, one increases $\eta$ in Eq. [1] by increasing $\eta_{con}$, through the inserting of electrical forces in the recirculator (concentrator), summing to the mechanical forces that are the only ones that exist in the concentrator of the device described in WO0141934. However, paradoxically, if instead of a recirculator (concentrator) one used an ESP, the particles would be captured on such ESP, and as such the fraction of particles returning back to the reverse-flow cyclone would be close to zero. This means that the system would no longer function according to Eq. [1] and the global efficiency would be very similar to that of the ESP, without the need to have a reverse-flow cyclone and the recirculation loop. Adding to this, one would have the vast majority of disadvantages pertaining to ESPs.

Therefore, it is verified that, according to the invention, the mentioned objectives are reached using recirculating cyclones for dedusting and dry gas cleaning - comprising a reverse-flow collector cyclone and a straight-through concentrator cyclone (recirculator) with a central channel for the exaustion of cleaned gases, wherein these cyclones are in series and with recirculation, with the collector placed upstream from the concentrator, and with a recirculation line for part of the flow being processed, from the concentrator back to the collector - characterized in that, in the recirculator there are electrical means for applying high voltage, producing an ionizing field which will impart a net velocity component to the particles travelling through the concentrator towards the wall, without promoting their deposition on such wall.

According to the invention, the electrical means for applying high voltage are constituted by one or more electrical discharge electrodes located according to the longitudinal axis of the concentrator (recirculator), crossing the recirculator wall and electrically insulated from it by known methods, where the wall itself is grounded in order to create a high voltage difference between this wall and the discharge electrode(s). The voltage applied to the discharge wire, the diameter of the discharge electrode(s), and the distance between the discharge electrode (s) and the wall of the concentrator - which in turn depends on the nominal diameter ($D_2$) of the concentrator - are combined so that the current density at the wall is less than 0.1 mA/m$^2$. The discharge electrode may assume the shape of a conductive wire.

Even if the main objective according to the invention is to recycle back to the reverse-flow cyclone (collector) the uncaptured particles, one expects that, due to the larger particle concentration near the recirculator walls, it may be necessary and even beneficial to recycle a lower gas fraction ($\approx$20 to 30% against 30-40% used for purely mechanical recirculation), so that the operating costs will be lower, since the electrical forces only act on particles and not on the gas. In fact, whereas to recycle 30-40% of a gaseous stream of 50,000 m$^3$/h one needs about $\approx$18-25 kW of power in the recirculation blower, to recycle 20% of the same stream only 12 kW are needed, already including the electric power required to establish electrostatic recirculation through an ionized field. The savings in electric power are higher than 35%, which is significant.

So, it is also paradoxal that, while the proposed invention adds high voltage electrical components to the exclusively mechanical recirculation system described in WO0141934, the total power consumption is actually lower.

**Brief description of the figures**

Fig. 1 is a schematic representation of an all-mechanical cyclone recirculation system.

Fig. 2 is a schematic representation of the device according to the invention.

Fig. 3 represents a graph of global efficiencies (η) for the system of Fig.2.

Fig. 4 represents a graph of grade efficiencies for the concentrators of Figs. 1 and 2 (curves 1 and 2, respectively).

Figs. 5 and 6 show how different geometries (resulting from interelectrode distances) of the electrostatic concentrator according to the invention (continuous line) make it so different from a traditional ESP (dots).

Figs. 7-8 show the differences of efficiencies obtained between high-efficiency cyclones, following EP0972572, standing alone (0), cyclones according to WO0141934 with purely mechanical recirculation (1) and cyclones according to the invention (2).

Fig. 9 shows the different cut-diameters for the devices of Figs. 7-8.

Fig. 10 shows the average increase in capture efficiency obtained by the device according to the invention (2).

Figs. 11-13 show the increase in efficiency obtained in pilot-scale experiments with three different types of particles.

Fig. 14 shows the comparative result between a standing alone inverted-flow cyclone (0), a merely mechanical recirculation cyclone device (1) and a device according to the invention (2), for capturing airborne bacteria.

## Detailed description of the invention

Fig. 1 is a schematic representation of a cyclone system with purely mechanical recirculation, comprised by a reverse-flow cyclone, named collector (Col), by a straightthrough cyclone, named concentrator (Con), located dowstream, and by a recirculation system with blower, venturi or ejector, as described in the state-of-the-art.

Fig. 2 is a schematic representation of the device according to the invention, comprising a reverse-flow cyclone, named collector (Col), by a straight-through cyclone, named concentrator or electrostatic recirculator (Con), located dowstream, electrified by a high voltage dc power supply (AT) - with reference to the nominal diametrs of the collector and concentrator ($D_1$, $D_2$) - and by a recirculation system, which can be a blower, venturi or ejector. Such representation serves merely the purpose of exemplification and should not be limitative, and one can see where the dirty gas enters (GS), where the captured particles exit (P) and where the cleaned gas exits (GL).

As is verified, the main difference between the invention and cyclones with recirculation of the state-of- - the-art (with purely mechanical recirculation) - as shown in Fig. 1 - is the electrification of the concentrator. However, the voltage (AT) applied to the discharge electrode, the diameter of the discharge electrode and the distance between it and the concentrator wall are all combined to originate a current density below about 0.1 mA/m$^2$, which confers characteristics to the device completely different from the ones of a conventional ESP.

The concept of the invention is depicted in Figs. 3 and 4.

Fig. 3 shows a graph of global efficiencies (η) for the system of Fig.2, showing that the efficiency of the system is always larger than that of the standing-alone collector ($\eta_{col}$) and that increasing the concentrator efficiency ($\eta_{con}$) will increase the system efficiency (η).

Fig. 4 shows a graph of grade-efficiencies - efficiency depending on particle size [diameter ($\phi$)] - for the concentrators of Figs. 1 and 2 (curves 1 and 2 respectively) - showing that the electrostatic recirculation efficiency (η) is much superior to the purely mechanical recirculation efficiency (η), while particle deposition on the walls (η) for fine particles is negligible (curve3). This figure was obtained through simulation, using results obtained experimentally in a full-scale facility with mechanical recirculation, and extrapolating for electrostatic recirculation using appropriate theories (Salcedo, 1981).

It is verified through Fig. 4, that with an electrostatic concentrator according to the invention (also called herein electrostatic recirculator), particle deposition on the walls is very low for fine particles (curve 3) - which are the ones escaping more from the collector cyclone and entering the concentrator - and that there is a remarkable increase in recirculation efficiency back to the reverse-flow cyclone, the electrostatic recirculation efficiency (curve 2) being much superior than the purely mechanical one (curve 1), specially for submicrometer particles, thus increasing the term $\eta_{con}$ in Eq. [1].

Fig. 3 on its turn shows the beneficial effect of increasing the term $\eta_{con}$ in the global efficiency η.

The proposed concept, of electrostatic recirculation, even if using one device - the electrostatic recirculator - that, when schematically shown (Fig. 2) apparently resembles ESPs, presents considerable differences in relation to conventional ESPs, these differences being apparent from curve 3 of Fig. 4. Other differences are:

1. Tubular ESPs are vertical, so that particles captured on the walls may be removed through the base. The proposed recirculator may be oriented in any position, including the horizontal, since it is not intended to operate as a particle collector.

2. Tubular ESPs have a system for vibrating, hammering or washing the walls, to remove deposited particles. Such is not the case for the proposed concentrator, since it does not need any dust layer removal device.

3. Tubular ESPs have dust hoppers to collect particles dislodged from their walls. The proposed concentrator does not need any hopper, since it is not a collector (this task is left to the reverse--flow cyclone located upstream from the concentrator).

4. Tubular ESPs operate with high electric fields (>5x10$^5$ V/m), so that the current density is high (>1 mA/m$^2$), leading to a large migration rate (w) of the particles towards the collection electrode ($\approx$0.1-1 m/s for particle diameters between 0.1-10 $\mu$m) and large collection efficiencies (>95%). This is achieved by spacing apart the electrodes over a distance of around 200 mm (typically between 150-250 mm; Parker, 1997), for applied maximum voltages of the order of 60-70 kV. Such is not the case of the proposed recirculator, in which the spacing apart distance between the electrodes is very large ($\approx$450-600 mm). With maximum applied voltages of the order of 50 kV, the electric field produced is low (<2x10$^5$ V/m), with low current densities (<0.1 mA/m$^2$), originating low migration velocities of particles toward the walls ($\approx$0.01-0.05 m/s for particle diameters between 0.1-10 $\mu$m) and very low particle deposition on the walls (ideally, particle deposition on recirculator walls should be zero).

5. If the electrostatic component of the electrostatic recirculator malfunctions, the mechanical recirculation is still operational. On the contrary, failure of the electrified fields in ESPs completely compromises the efficiency of these devices and their use as particles removers.

Table I, below, summarizes these differences.

## TABLE I

## Significant differences between tubular ESP (Parker, 1997) and electrostatic recirculator according to the invention

| Type | Orientation | Hopper | Particle Removal | Inter-electrode Spacing mm | Average Electric Field V/m |
|------|-------------|--------|------------------|----------------------------|----------------------------|
| Tubular ESP | Vertical | Yes | Hammer Vibration Washing | 150-250 (200) | > 5x10$^5$ |
| Electrostatic Recirculator | Any | No | No | 450-600 | < 2x10$^5$ |

TABLE I (continuation)

| Type | Current Density | Migration Velocity (w) (*) | Sensitivity to very low or high particle resistivity |
|---|---|---|---|
| | mA/m$^2$ | m/s | Ohm·m |
| Tubular ESP | > 1 | 0.1-1 | High for range (<10$^6$ or >10$^9$) |
| Electrostatic Recirculator | < 0.1 | 0.01-0.05 | None |

(*) — for particle diameters between 0.1-10 µm

TABLE I (continuation)

| Type | Sensitivity to High Voltage Shutdown | Typical Removal Efficiency (**) |
|---|---|---|
| | | % |
| Tubular ESP | Fatal | > 95 |
| Electrostatic Recirculator | Low (mechanical recirculation in operation) | < 10 |

(**) — for particle size distributions emitted by biomass boilers (wood waste)

Fig. 5 shows that, for the electrostatic concentrator, the particle migration velocity (w) towards the walls - for a wide range of particle diameters ($\phi$) - only has values close to those obtained with ESPs if the applied voltage is over 200 kV.
Fig. 6 shows that, for the electrostatic concentrator, the particle retention efficiency ($\eta$) - depending on their size [diameter ($\phi$)] - on the walls (which in the case of the invention should be minimized) only has values close to those obtained with ESPs if the applied voltage is over 200 kV.

In Figs. 5 and 6, dots represent typical values for ESPs (Parker, 1997), the continuous curve represents the device according to the invention, when operating at 50 kV, and the interrupted curve represents the tension, of about 200 kV, that it would be necessary to apply (simulation) to the device according to the invention, to bring its behaviour close to that of conventional ESPs, both in terms of particle migration velocity and of particle collection efficiency on the walls, respectively.

Said figures 5 and 6 show that, to obtain migration velocities (w) and collection efficiencies ($\eta$) typical of ESPs (Parker, 1997), it would be necessary to operate the recirculator proposed in the invention at about 200-300 kV. Such extreme voltages are never used in ESPs, due to cost and safety reasons.

On the other hand, the differences between the device according to the invention (in which the recirculator is electrified) and the electrified collectors (inverted reverse-flow cyclones) from the state-of-the-art, are shown in Table II below, that presents the cyclone diameters - and corresponding volumes - necessary to have a discharge wire length, measured between the lower end of the vortex tube and the beginning of the cone, of 2.7 m, which is considered a typical value occurring in an electrostatic concentrator (recirculator) according to the invention and designed for industrial applications, considering an electrostatic concentrator with nominal diameter ($D_2$) of 0.6 m and corresponding volume of 1.13 m$^3$.

Tab. II - Nominal diameter and volume for 3 types of cyclones with a discharge wire of 2.7 m

| Type of Cyclone | Diameter (m) | Volume (m$^3$) |
|---|---|---|
| Lapple (low efficiency) | 1.964 | 12 |
| Stairmand_HE (high efficiency) | 2.700 | 31 |
| EP0972572 (very high efficiency) | 5.050 | 154 |

The volume necessary to maintain the electrostatic effect increases drastically when changing from low to high and very-high efficiency cyclones. The coupling, in a reverse-flow cyclone, between purely mechanical capture and mixed mechanical-electrical capture is not industrially practical, since the cyclones would have to be huge or mechanically inefficient, thus making them similar to purely ESPs.

As explained before, the concentrator (electrostatic recirculator) according to the invention, is either partially or totally crossed on its length by an electrode or a system of discharge electrodes, connected to a high voltage supply and properly electrically insulated. The discharge only occurs at the concentrator (recirculator), and its walls, as well as the reverse-flow collector cyclone and connective piping should be appropriately grounded.

The three components are connected as follows: the gas to be treated or cleaned enters the reverse-flow cyclone, where a fraction of particles are caught. The particles escaping collection enter, with the total gas flow, the concentrator cyclone (electrostatic recirculator), where a small fraction of the gas with a substantial fraction of the uncollected particles is recirculated back to the reverse-flow cyclone through the blower, venturi or ejector. Said substantial fraction of the uncollected particle is concentrated more efficiently by applying an ionized electric field in the concentrator, as opposed to a purely mechanical recirculation. The concentrator should operate at an applied voltage that allows for some electric current between the discharge electrodes and its walls, but particle deposition on the recirculator walls should be minimized. Such is obtained for current densities of about 0.1 mA/m$^2$ or below.

To better understand these phenomena, the proposed system was modeled using a computer program based on the finite diffusivity theory of Mothes and Loffler (1988), which is the best theory currently available (on a diagnosis level) for the simulation of particle capture in reverse-flow cyclones. Since this model needs knowledge about the particle turbulent dispersion coefficients, these were obtained using an adequate correlation (Salcedo and Coelho, 1999). Fig. 4 shows the predicted grade-efficiency curves (efficiency depending on particle size) for the proposed system, when compared to the all-mechanical recirculator, for a system at industrial scale, both treating the same gas flowrate and particles, and a significant increase in recirculation efficiency is obtained for most of the smaller particles,. This causes the system global efficiency to increase significantly. For example, using the data that served for obtaining Fig. 4, it is predicted that simply with mechanical recirculation, the global efficiency ($\eta$) is about 83.2%, while with electrostatic recirculation it should be about 94.7%, viz. leading to emission reductions of 68%.

As the electrostatic effect in the recirculator is favoured by a longer particle charging time, it is better to operate the system at low gas velocities, so that the total pressure drop and consequently the operating costs are then reduced when compared to the ones of the all-mechanical recirculation system. The use of a venturi for recirculation allows using the system at very high temperatures, provided that the gas flowrate is not too high. For higher gas flowrates one may use appropriate ejectors or a secondary blower. These systems may also be used for economically dry cleaning of acid gases, since they will partially recirculate the solid reactant partially converted to solid product back to the reverse-flow cyclone.

Efficient processes for dedusting flue gases and/or dry cleaning of gaseous components - especially acid gases, such as HCl (hydrogen chloride), HF (hydrogen fluoride), $SO_2$ (sulfur dioxide) and $NO_x$ (nitrogen oxides) - of flue gases are obtained by making such gaseous streams traverse a cyclone system with cyclones in series, where the collector precedes the electrified concentrator, and where there is a recirculation loop from the concentrator back to the collector, and, in the case of dry gas cleaning, an injection (not shown in the figures) of an appropriate solid sorbent (e.g. in finely divided form), upstream from the collector or from the recirculation blower, venturi or ejector.

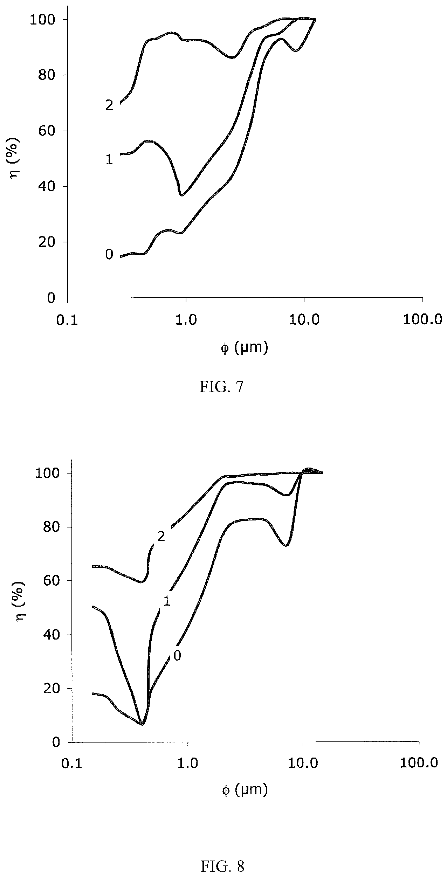

As previously shown, the efficiency of the system according to the present invention is always larger than the efficiency of the devices of the state-of-the-art (Figs. 3 and 4), where the recirculator is not electrified. The practical examples given below will corroborate the increase in efficiency (Figs. 7-9).

The system according to the invention may also be used, with great advantage, to substitute reactors presently used (such as spray-dryer or venturi rectors) for dry cleaning of acid gases, and makes possible to design extremely compact and highly efficient units, both for acid gas removal and for the use of unreacted sorbent, due to the efficient recirculation loop.

The system according to the invention has also the following advantages:

- The electrostatic recirculator may be used in any orientation, even in the horizontal;
- There is no need for complicated systems for particle removal from its walls, since the deposition is intrinsically minimized, by, *inter alia,* the high interelectrode spacing apart that is a characteristic of the device according to the invention;
- There is no need for dust hoppers in the recirculator, since the collector is the reverse-flow cyclone;
- Uses voltage levels commonly used in ESPs, or even lower;
- Does not suffer from problems related either to low or high dust resistivity;
- Has the capability of recirculation through blower, venturi or ejector;
- Has the capability of removing particles and/or dry cleaning acid gases from flue gases.
- Has the capability of operating at very high temperatures, through the use of a venturi or ejector for recirculation;
- It has no moving parts, in the case of recirculation being provided by a venturi or ejector; and
- Acts as an all-mechanical recirculation cyclone system, in case of high-voltage failure (e.g. discharge electrode rupture).

**Practical examples**

A pilot-scale unit was built to demonstrate the capability of electrostatic recirculation of the system, through the use of a blower for promoting mechanical recirculation and of a high-voltage source for promoting electrostatic recirculation.

Figs. 7-8 show - depending on particle diameter [diameter $\phi$] - the efficiencies ($\eta$) obtained at pilot scale, respectively for the stand-alone cyclone (curve 0), for the all-mechanical recirculation (curve 1) and for the electrostatic recirculation (curve 2), for two extreme conditions: a very low pressure drop in the cyclone (400 Pa) - Fig.7 - and a typical pressure drop in the cyclone (1620 Pa) - Fig.8.

Such figures, representing data obtained by feeding the cyclone with very thin airborne particles (mass median from 1.8 to 2.3 $\mu$m), show that the global efficiency of the system with electrostatic recirculation (curve 2) is always significantly larger than that with an all-mechanical one, but, especially for low pressure drop in the cyclone, that is, for low velocity, which corresponds to high residence time. In other words, the electrostatic recirculation is mostly better than all-mechanical recirculation, in situations where the all-mechanical recirculation is less efficient.

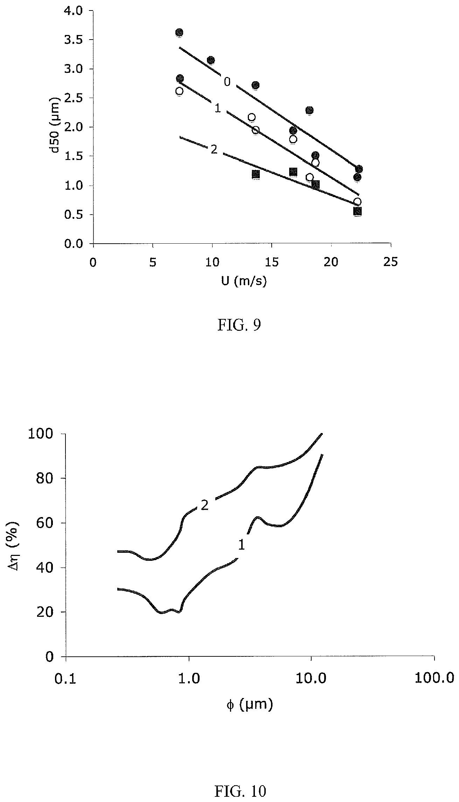

Fig. 9 shows the cyclone cut-diameters (d50), depending on the average air velocity (U) entering the cyclone, for three situations: filled dots (curve 0) represent the stand-alone collector cyclone; hollow dots (curve 1) represent the mechanical recirculation; and squares (curve 2) represent the additional electrostatic recirculation.

This figure shows the difference in the cyclone cut diameters (particle diameters for which cyclone efficiency is 50%), for the same particles, when mechanical (1) or electrostatic (2) recirculation is applied. Electrostatic recirculation is clearly more advantageous, presenting smaller cut diameters for the same entrance velocity of the gas in the cyclone.

Fig. 10 shows the average increase in particle capture efficiency ($\Delta\eta$) obtained at pilot-scale, depending on particle size [diameter ($\phi$)], when all-mechanical recirculation (curve 1) or electrostatic recirculation (curve 2) is applied.

This figure shows the average increase in efficiency of a series of runs, over that of the stand-alone collector cyclone. Once more, electrostatic recirculation (2) represents a marked increase in efficiency over all-mechanical recirculation (1). Experiments made with industrial fly ash emitted from wood and cork waste boilers confirm the results obtained with airborne particles.

Fig. 11 shows the efficiency ($\eta$) for dicalcium phosphate particles, with a median volume diameter of 6.2 $\mu$m, with all-mechanical recirculation (hollow dots, 1) and with electrostatic recirculation (filled dots, 2), for various velocities (U) of the flue gas.

Fig. 12 shows the efficiency ($\eta$) for iron ore blast furnace particles, with a median volume diameter of 7.5 $\mu$m, with all-mechanical recirculation (hollow dots, 1) and with electrostatic recirculation (filled dots, 2), for various velocities (U) of the flue gas.

Fig. 13 shows the efficiency ($\eta$) for phosphorite particles, with a median volume diameter of 13.2 $\mu$m, with all-mechanical recirculation (hollow dots, 1) and with electrostatic recirculation (filled dots, 2), for various velocities (U) of the flue gas.

So, it is verified that the proposed system can significantly reduce particulate emissions, when compared to reverse-flow cyclones or other recirculation systems with the concentrator upstream or downstream from the collector. The use of very high efficiency designs for the collector (viz. the design described in said patent EP0972572) allows the proposed system to compete in efficiency with more costly equipments (scrubbers, venturis, bagfilters and ESPs), even in terms of particle sizes below about 0.5 $\mu$m, with the additional advantage of operation at very high temperatures and for the dry cleaning of acid gases, by employing an appropriate dry sorbent injection, in particular powders.

Well, the development of dedusters with efficiencies significantly above those of current cyclones or recirculation cyclone systems, using simple and inexpensive technologies, mainly for particle sizes below 2-3 $\mu$m in diameter, has a great potential for industrial usage. Several industries (wood, metals, cement, chemical, solid-fuel and biomass boilers) could benefit from low cost devices and with sufficient efficiency to avoid the need to use more expensive dedusters, such as bagfilters and ESPs. Likewise, the automotive industry, in its search for cleaner emissions from diesel engines, could benefit from a device such as the proposed here, usable at high temperatures and without any moving parts.

The proposed system can also be used, with great advantage, instead of the presently available reactors for the dry cleaning of acid gases, such as HCl, HF, $SO_2$ and $NO_x$ (nitrogen oxides), where it is possible to design very compact units with high collection efficiency, both in removing acid gases and in the reuse of unspent sorbent, due to the electrostatic recirculation loop.

Finally, as seen in Fig, 14, the device and process according to the invention are so efficient in capturing small particles, that they can be used, for example, for capturing airborne bacteria.

As a matter of fact, Fig. 14 shows, very schematically, the comparative result in capturing airborne bacteria, based on the counting of colony forming units at the end of two (d=2) and six (d=6) days, comparing a pilot electrostatic recirculation system operating at 50 kV, according to the invention (2), an all-mechanical recirculation system (1) and a stand-alone cyclone (0), to a sample of fresh air entering the system. The number of *cfu* shown in the figure is given by the value of n, one cfu being one colony-forming unit.

It is verified that there is a (bacteria) capture efficiency of approximately 90% deriving from the fact that:

- there are 8 colonies entering the system (fresh air) after 2 days incubation, and only one exiting (with electrostatic recirculation), resulting in $\eta$=87.5%, and
- there are more than 50 colonies entering the system after 6 days incubation, and only 4 exiting, resulting in $\eta$>92.0%,

representing an (approximate) average efficiency value of 90%.

There is a further embodiment of the invention that is not shown in the figures, and that is characterized in that in parallel with the straight-through cyclone concentrator (recirculator, Con) having the electrical means for providing an ionizing high tension (AT), there are other straight-through concentrator cyclone(s) (recirculator(s)) having the electrical means for providing an ionizing high tension, defining a parallel multi-electrostatic recirculator arrangement, where all are fed by the same reverse-flow cyclone (Col) - placed upstream from such arrangement - and recirculating a fraction of the respective gaseous stream, concentrated in particles, back to this cyclone collector. This parallel arrangement of recirculators lowers the velocity in each recirculator, providing for added residence time and added charging of the particles (Fig. 11-13; filled circles (2)).

Another embodiment of the invention, which is also not represented in the Figures, is characterized in that, in series with the straight-through concentrator cyclone (recirculator, Con) having the electrical means for providing an ionizing high tension (AT), there are other straight-through concentrator cyclone(s) (recirculator(s)) having the electrical means for providing an ionizing high tension, defining a serial multi-electrostatic recirculator arrangement, where all are fed by the same reverse-flow cyclone (Col) - placed upstream from such arrangement - each concentrator recirculating a fraction of the gaseous stream, concentrated in particles, back to this collector cyclone. This serial arrangement of recirculators provides for added residence time and added charging of the particles (Fig. 11-13; filled circles (2)).

In this document, the use of the expression "about" when specifying the limit values for intervals referring to the invention, must be considered as comprising a 10% variation on those same limits, such that the interval broadens.

**References**

Carminati, A., A. Lancia, D. Pellegrini and G. Volpiccelli, "Spray dryer absorption of HCl from flue gas", Proc. 7th World Clean Air Con gr., 426, 1986.

A.M. Fonseca, J.M. Órfão and R.L. Salcedo, "Dry scrubbing of HCl with solid lime in a cyclone reactor at low temperatures", Ind. Eng. Chem. Res., 40, no. 1, 304-313, 2001.

Heap, B.M., "The continuing evolution and development of the dry scrubbing process for the treatment of incinerator flue gases", Filtr. Sep., vol. 33, 375, 1996.

Licht, W., "Air Pollution Control Engineering-basic calculations for particulate collection", Marcel Dekker, New York and Basel, 1980.

Lim, K.S., K.W. Lee and M.R. Kuhlman, "An experimental study of the performance factors affecting particle collection efficiency of the electrocyclone", Aerosol Science and Technology, 35, 969-977, 2001.

Lim, K.S., H.S. Kim and K.W. Lee, "Comparative performances of conventional cyclones and a double cyclone with and withouit an electric field", J. Aerosol Science, 35, 103-116, 2004.

Mothes, H. and F. Loffler, "Prediction of particle removal in cyclone separators", International Chemical Engineering, vol. 28, 231-240, 1988.

Oglesby, S. Jr. and G.B. Nichols, "Electrostatic Precipitation", Marcel Dekker, Inc., 1978.

Parker, K.R., "Applied Electrostatic Precipitation", Blackie Academic & Professional, 1997.

Salcedo, R.L.R., "Chemical separation in electrostatic precipitators", Ph.D. Thesis, McGill University, Montreal, Canada, 1981.

Salcedo, R.L. and M.A. Coelho, "Turbulent Dispersion Coefficients in Cyclone Flow: an empirical approach", Can. J. Chem. Eng., Agosto, 609-616, 1999.

Salcedo, R.L. and M.J. Pinho, "Ciclones de muito elevada eficiência: da concepção à implementação industrial", Ingenium, 2a série, n° 69, Setembro, 79-82, 2002.

Salcedo, R.L. and M.J. Pinho, "Pilot and Industrial-Scale Experimental Investigation of Numerically Optimized Cyclones", Ind. Eng. Chem. Res., 42, no. 1, 145-154, 2003.

Salcedo, R.L. and M. de Sousa Mendes, "Captura de poeiras finas com ciclones optimizados: estudo de dois casos industriais", Industria e Ambiente, n° 30, 2° trimestre, 18-22, 2003.

Salcedo, R.L.R., V. G. Chibante and I. Sôro, "Laboratory, pilot and industrial-scale validation of numerically optimized reverse-flow gas cyclones", Trans. of the Filt. Soc. 4(3), 220-225, 2004.

Shrimpton, J.S. and R.I. Crane, "Small electrocyclone performance", Chem. Eng. Technology, 24(9), 951-955, 2001.

White, H.J., "Industrial Electrostatic Precipitation", International Society for Electrostatic Precipitation, Addison-Wesley Publ. Co., 1963.

**Claims**

1. - Cyclone system for dedusting and dry gas cleaning - comprising a reverse-flow collector cyclone (Col) upstream from a straight-through concentrator cyclone (Con), these cyclones being placed in series and having a recirculation line from the concentrator (Con) to the collector (Col), for a fraction of the gas to be treated, said straight-through concentrator cyclone (Con) having a central channel for cleaned gas exhaustion (GL) and an entrance that is tangential to the lateral wall of said straight-through concentrator cyclone (Con) which comprises electrical means for applying high voltage (AT) to form an ionized electric field imparting a charge on the particles inside the straight-through concentrator cyclone (Con), making such particles to travel away from the central exhaust channel - whereby said electrical means for applying high tension (AT) are comprised by at least a discharge electrode placed according to the longitudinal axis of the straight-through concentrator cyclone (Con), electrically insulated from the wall of the straight-through concentrator cyclone (Con), being that no discharge electrode is placed outside said straight-through concentrator cyclone, said wall is grounded, so that a large potential difference establishes between the wall and said discharge electrode, and the voltage applied to the discharge electrode, the shape and diameter of the discharge electrode and the spacing apart between the discharge electrode and the wall of the straight-through concentrator cyclone (Con), are combined so that both a current density below about 0.1 mA/m$^2$ and a ionized electric field with an average value below about $2 \times 10^5$ V/m are generated in the straight-through concentrator cyclone (Con).

2. - Cyclone system according to claim 1, **characterized in that** the recirculation of the flue gases is made by a blower, ejector or venturi.

3. - Cyclone system according to claim 1, **characterized in that,** in parallel with the straight-through concentrator cyclone (Con) having the electrical means for providing an ionizing high tension (AT), there is at least another straight-through concentrator cyclone (Con), also having electrical means for providing an ionizing high tension, defining a parallel multi-electrostatic straight-through concentrator cyclones arrangement, where all the straight-through concentrator cyclones (Con) are fed by the same reverse-flow collector cyclone (Col) - placed upstream from such arrangement - and re-circulate a fraction of the respective gaseous stream, with concentrated particles, back to said reverse-flow collector cyclone (Col).

**4.** - Dedusting process of a gaseous stream - where such stream in a first step enters a reverse-flow collector cyclone (Col), where part of the particles of such gaseous stream are captured (P), in a second step enters a straight-through concentrator cyclone (Con), such entrance being made according to a tangential direction to the lateral wall of such straight-through concentrator cyclone (Con) and, in a third step, divides into two different streams, the main one escaping from said straight-through concentrator cyclone (Con) through a central channel for the exhaust of cleaned gases (GL), and the other one, where part of the particles having escaped from the reverse-flow collector cyclone (Col) and remaining in the gas stream flowing through the straight-through concentrator cyclone (Con) are concentrated, is circulated back to said reverse-flow collector cyclone (Col) - whereby the particles in the straight-through concentrator cyclone (Con) are directed away from the central exhaust channel by the joint action of mechanical (inertial) and electrical forces, where these last ones are produced by the particles inside the straight-through concentrator cyclone (Con) traversing a high voltage ionized electric field, established between at least a discharge electrode placed according to the longitudinal axis of the straight-through concentrator cyclone (Con), electrically insulated from the wall of the straight-through concentrator cyclone (Con), and said wall, which is grounded, being that no discharge electrode is placed outside said straight-through concentrator cyclone, and said ionized electric field inside the straight-through concentrator cyclone (Con) has an average value below about $2\times10^5$ V/m and generates an electrical current density flow below about 0.1 mA/m$^2$, the mentioned joint action thus providing the concentration of most part of the remaining particles in the mentioned portion of gaseous stream flow that is cycled back to the reverse-flow collector cyclone (Col) where part of the re-circulated particles are captured.

**5.** - Process according to claim 4, **characterized in that** the fraction of re-circulated gas from the straight-through concentrator cyclone (Con) to the reverse-flow collector cyclone (Col) is about 20 to 30% of the total entering the reverse-flow collector cyclone (Col).

**6.** - Process for dedusting and dry gas cleaning, according to any one of the claims 4 or 5, **characterized in that** there is an injection of solid sorbent for dry gas cleaning, upstream from the reverse-flow collector cyclone (Col), or upstream from a recirculation blower, venturi or ejector.

**7.** - Use **characterized in that** the device of claim 1 and the process of claim 4 are employed for dedusting and dry gas cleaning of acid gases, comprising HCl (hydrogen chloride), HF (hydrogen fluoride), SO$_2$ (sulfur dioxide) and NO$_x$ (nitrogen oxides).

**8.** - Use **characterized in that** the device of claim 1 and the process of claim 4 are employed for dedusting exhaust gases from diesel engines.

**9.** - Use **characterized in that** the device of claim 1 and the process of claim 4 are employed for capturing bacteria from a gas flow.

**Patentansprüche**

**1.** - Zyklonsystem zum Entstauben und Trockengasreinigen - umfassend einen Gegenstromsammelzyklon (Col) stromaufwärts von einem Durchgangskonzentratorzyklon (Con), wobei diese Zyklone in Reihe angeordnet sind und eine Rezirkulationsleitung von dem Konzentrator (Con) zu dem Sammler (Col) aufweisen, damit Bruchteil des Gases behandelt wird, wobei der Durchgangskonzentratorzyklon (Con) einen Zentralkanal für Absaugung von gereinigtem Gas (GL) und einen Eingang aufweist, der tangential zu der Seitenwand des Durchgangskonzentratorzyklons (Con) ist, der elektrische Mittel zum Aufbringen hoher Spannung (AT) umfasst, um ein ionisiertes elektrisches Feld zu bilden, das den Teilchen innerhalb des Durchgangskonzentratorzyklons (Con) eine Ladung verleiht, wodurch die Teilchen sich von dem zentralen Absaugungskanal wegbewegen - wobei die elektrischen Mittel zum Aufbringen hoher Spannung (AT) von mindestens einer Entladungselektrode umfasst sind, die entsprechend der Längsachse des Durchgangskonzentratorzyklons (Con) angeordnet ist, elektrisch isoliert von der Wand des Durchgangskonzentratorzyklons (Con), wobei keine Entladungselektrode außerhalb des Durchgangskonzentratorzyklons angeordnet ist, wobei die Wand geerdet ist, sodass eine große Potentialdifferenz zwischen der Wand und der Entladungselektrode und der Spannung, die an der Entladungselektrode aufgebracht wird, hergestellt wird, wobei die Form und der Durchmesser der Entladungselektrode und die Beabstandung zwischen der Entladungselektrode und der Wand des Durchgangskonzentratorzyklons (Con) kombiniert sind, sodass sowohl eine Stromdichte unter etwa 0,1 mA/m$^2$ als auch ein ionisiertes elektrisches Feld mit einem Durchschnittswert unter etwa 2 x 10$^5$ V/m in dem Durchgangskonzentratorzyklon (Con) erzeugt werden.

**2.** - Zyklonsystem nach Anspruch 1, **dadurch gekennzeichnet, dass** die Rezirkulation der Rauchgase durch ein Gebläse, einen Auswerfer oder ein Venturirohr gemacht wird.

**3.** - Zyklonsystem nach Anspruch 1, **dadurch gekennzeichnet, dass** parallel zu dem Durchgangskonzentratorzyklon (Con), der die elektrischen Mittel zum Bereitstellen einer ionisierenden Hochspannung (AT) aufweist, mindestens ein weiterer Durchgangskonzentratorzyklon (Con) ist, der auch elektrische Mittel zum Bereitstellen einer ionisierenden Hochspannung aufweist, wodurch eine parallele multielektrostatische Durchgangskonzentratorzyklonenanordnung definiert wird, in der alle Durchgangskonzentratorzyklone (Con) durch denselben Gegenstromsammelzyklon (Col) versorgt werden - der stromaufwärts von der Anordnung angeordnet ist - und einen Bruchteil des jeweiligen Gasstroms, mit konzentrierten Teilchen, zurück in den Gegenstromsammelzyklon (Col) rezirkulieren.

**4.** - Entstaubungsverfahren eines Gasstroms - wobei der Strom in einem ersten Schritt in einen Gegenstromsammelzyklon (Col) eintritt, wobei ein Teil der Teilchen des Gasstroms eingefangen werden (P), in einem zweiten Schritt in den Durchgangskonzentratorzyklon (Con) eintritt, wobei der Eintritt entsprechend einer tangentialen Richtung zur Seitenwand des Durchgangskonzentratorzyklons (Con) gemacht wird und sich, in einem dritten Schritt, in zwei verschiedene Ströme teilt, wobei der Hauptstrom von dem Durchgangskonzentratorzyklon (Con) durch einen zentralen Kanal für den Auslass von gereinigten Gasen (GL) entweicht, und der andere, wobei ein Teil der Teilchen, die aus dem Gegenstromsammelzyklon (Col) entwichen sind und in dem Gasstrom bleiben, der durch den Durchgangskonzentratorzyklon (Con) fließt, konzentriert sind, zurück zu dem Gegenstromsammelzyklon (Col) zirkuliert wird - wobei die Teilchen in dem Durchgangskonzentratorzyklon (Con) durch gemeinsame Maßnahme mechanischer (träger) und elektrischer Kräfte von dem zentralen Abgaskanal weggeleitet werden, wobei die letzteren von den Teilchen innerhalb des Durchgangskonzentratorzyklons (Con) hergestellt werden, die ein ionisiertes elektrisches Hochspannungsfeld durchqueren, das zwischen mindestens einer Entladungselektrode, entsprechend der Längsachse des Durchgangskonzentratorzyklons (Con) angeordnet ist, elektrisch von der Wand des Durchgangskonzentratorzyklons (Con) isoliert, und der Wand eingerichtet ist, die geerdet ist, sodass keine Entladungslektrode außerhalb des Durchgangskonzentratorzyklons angeordnet ist, und das ionisierte elektrische Feld innerhalb des Durchgangskonzentratorzyklons (Con) einen Durchschnittswert unter etwa 2 x 10$^5$ V/m aufweist und einen elektrischen Stromdichtestrom unter etwa 0,1 mA/m$^2$ erzeugt, wobei die gemeinsame Maßnahme so die Konzentration des größten Teils der verbleibenden Teilchen in dem Abschnitt des Gasstromflusses bereitstellt, der zurück in den Gegenstromsammelzyklon (Col) zirkuliert wird, wobei ein Teil der rezirkulierten Teilchen eingefangen wird.

**5.** - Verfahren nach Anspruch 4, **dadurch gekennzeichnet, dass** der Bruchteil des rezirkulierten Gases von dem Durchgangskonzentratorzyklon (Con) an den Gegenstromsammelzyklon (Col) etwa 20 bis 30 % der Gesamtmenge ist, die in den Gegenstromsammelzyklon (Col) eintritt.

**6.** - Verfahren zum Entstauben und Trockengasreinigen nach einem der Ansprüche 4 oder 5, **dadurch gekennzeichnet, dass** es eine Einspritzung von festem Sorbtionsmittel zum Trockengasreinigen stromaufwärts von dem Gegenstromsammelzyklon (Col) oder stromaufwärts von dem Rezirkulationsgebläse, -venturirohr oder -auswerfer gibt.

**7.** - Verwendung, **dadurch gekennzeichnet, dass** die Vorrichtung nach Anspruch 1 und das Verfahren nach Anspruch 4 zum Entstauben und Trockengasreinigen von Sauergasen, umfassend HCl (Chlorwasserstoff), HF (Fluorwasserstoff), SO$_2$ (Schwefeldioxid) und NO$_x$ (Stickoxide) eingesetzt werden.

**8.** - Verwendung **dadurch gekennzeichnet, dass** die Vorrichtung nach Anspruch 1 und das Verfahren nach Anspruch 4 zum Entstauben von Abgasen von Dieselmotoren eingesetzt werden.

**9.** - Verwendung, **dadurch gekennzeichnet, dass** die Vorrichtung nach Anspruch 1 und das Verfahren nach Anspruch 4 zum Einfangen von Bakterien aus einem Gasstrom eingesetzt werden.

**Revendications**

**1.** Système cyclonique pour le dépoussiérage et le nettoyage à sec de gaz - comprenant un cyclone collecteur à écoulement inversé (Col) en amont d'un cyclone concentrateur direct (Con), ces cyclones étant placés en série et comprenant une conduite de recirculation du concentrateur (Con) vers le collecteur (Col), pour une fraction du gaz devant être traité, ledit cyclone concentrateur direct (Con) comprenant un canal central pour un échappement de gaz nettoyé (GL) et une entrée qui est tangentielle à la paroi latérale dudit cyclone concentrateur direct (Con) qui comprend un moyen électrique pour appliquer une haute tension (AT) pour former un champ électrique ionisé transmettant une charge sur les particules à l'intérieur du cyclone concentrateur direct (Con), amenant ces particules à s'éloigner du canal d'échappement central - moyennant quoi ledit moyen électrique pour appliquer une haute tension (AT) est composé d'au moins une électrode de décharge placée en fonction de l'axe longitudinal du cyclone concentrateur direct (Con), électriquement isolée de la paroi du cyclone concentrateur direct (Con), de sorte qu'aucune électrode de décharge ne soit placée à l'extérieur dudit cyclone concentrateur direct, ladite paroi est mise à la terre, de sorte qu'une différence de potentiel importante soit établie entre la paroi et ladite électrode de décharge, et la tension appliquée à l'électrode de décharge, la forme et le diamètre de l'électrode de décharge et l'espacement entre l'électrode de décharge et la paroi du cyclone concentrateur direct (Con) sont combinés de sorte qu'aussi bien une densité de courant inférieure à environ 0,1 mA/m$^2$ qu'un champ électrique ionisé présentant une valeur moyenne inférieure à environ $2\times10^5$ V/m soient générés dans le cyclone concentrateur direct (Con).

2. Système cyclonique selon la revendication 1, **caractérisé en ce que** la recirculation des gaz de combustion est réalisée par une soufflante, un éjecteur ou un venturi.

3. Système cyclonique selon la revendication 1, **caractérisé en ce que**, parallèlement au cyclone concentrateur direct (Con) comprenant le moyen électrique pour fournir une haute tension d'ionisation (AT), il y a au moins un autre cyclone concentrateur direct (Con), comprenant également un moyen électrique pour fournir une haute tension d'ionisation, définissant un agencement de cyclones concentrateurs directs multi-électrostatiques parallèles, où tous les cyclones concentrateurs directs (Con) sont alimentés par le même cyclone collecteur à écoulement inversé (Col) - placé en amont dudit agencement - et recirculent une fraction du flux gazeux respectif, avec des particules concentrées, vers ledit cyclone collecteur à écoulement inversé (Col).

4. Procédé de dépoussiérage d'un flux gazeux - où un tel flux dans une première étape entre dans un cyclone collecteur à flux inversé (Col), où une partie des particules de ce flux gazeux est capturée (P), dans une deuxième étape entre dans un cyclone concentrateur direct (Con), cette entrée étant réalisée en fonction d'une direction tangentielle de la paroi latérale de ce cyclone concentrateur direct (Con) et, dans une troisième étape, se divise en deux flux différents, le flux principal s'échappant dudit cyclone concentrateur direct (Con) à travers un canal central pour l'échappement de gaz nettoyés (GL), et l'autre flux, où une partie des particules s'étant échappée du cyclone collecteur à écoulement inversé (Col) et restant dans le flux de gaz s'écoulant à travers le cyclone concentrateur direct (Con) est concentrée, étant recirculée vers ledit cyclone collecteur à écoulement inversé (Col) - moyennant quoi les particules dans le cyclone concentrateur direct (Con) sont éloignées du canal d'échappement central par l'action conjointe de forces mécaniques (inertielles) et électriques, ces dernières étant produites par les particules à l'intérieur du cyclone concentrateur direct (Con) qui traversent un champ électrique ionisé à haute tension, établi entre au moins une électrode de décharge placée en fonction de l'axe longitudinal du cyclone concentrateur direct (Con), électriquement isolée de la paroi du cyclone concentrateur direct (Con), et ladite paroi, qui est mise à la terre, étant telle qu'aucune électrode de décharge n'est placée à l'extérieur dudit cyclone concentrateur direct, et ledit champ électrique ionisé à l'intérieur du cyclone concentrateur direct (Con) présente une valeur moyenne inférieure à environ $2\times10^5$ V/m et génère un écoulement de densité de courant électrique inférieur à environ 0,1 mA/m$^2$, l'action conjointe mentionnée assurant ainsi la concentration de la majeure partie des particules restantes dans la partie mentionnée de l'écoulement de flux gazeux qui est recyclé vers le cyclone collecteur à écoulement inversé (Col) où une partie des particules recirculées est capturée.

5. Procédé selon la revendication 4, **caractérisé en ce que** la fraction de gaz recirculé du cyclone concentrateur direct (Con) vers le cyclone collecteur à écoulement inversé (Col) est d'environ 20 à 30 % du total entrant dans le cyclone collecteur à écoulement inversé (Col).

6. Procédé de dépoussiérage et de nettoyage à sec de gaz, selon l'une quelconque des revendications 4 ou 5, **caractérisé par** une injection de sorbant solide pour un nettoyage à sec de gaz, en amont du cyclone collecteur à écoulement inversé (Col), ou en amont d'une soufflante, d'un venturi ou d'un éjecteur de recirculation.

7. Utilisation **caractérisée en ce que** le dispositif selon la revendication 1 et le procédé selon la revendication 4 sont utilisés pour le dépoussiérage et le nettoyage à sec de gaz de gaz acides, comprenant du chlorure d'hydrogène (HCl), du fluorure d'hydrogène (HF), du dioxyde de soufre (SO$_2$) et des oxydes d'azote (NO$_x$).

8. Utilisation **caractérisée en ce que** le dispositif selon la revendication 1 et le procédé selon la revendication 4 sont utilisés pour dépoussiérer des gaz d'échappement de moteurs diesel.

9. Utilisation **caractérisée en ce que** le dispositif selon la revendication 1 et le procédé selon la revendication 4 sont utilisés pour capturer des bactéries provenant d'un écoulement de gaz.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

EP 2 150 353 B1

FIG. 14

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- PT 102392
- WO 0141934 A
- US 6733554 B
- CA 2394651
- EP 1272278 A
- US 6355178 B1
- US 6355178 B
- US 4718923 A
- US 5458850 A
- US 6004375 A
- US 20060059874 A1
- US 20060059871 A1
- EP 0972572 A

### Non-patent literature cited in the description

- **CARMINATI, A. ; A. LANCIA ; D. PELLEGRINI ; G. VOLPICCELLI.** pray dryer absorption of HCl from flue gas. *Proc. 7th World Clean Air Con gr.,* 1986, vol. 426
- **A.M. FONSECA ; J.M. ÓRFÃO ; R.L. SALCEDO.** Dry scrubbing of HCl with solid lime in a cyclone reactor at low temperatures. *Ind. Eng. Chem. Res.,* 2001, vol. 40 (1), 304-313
- **HEAP, B.M.** The continuing evolution and development of the dry scrubbing process for the treatment of incinerator flue gases. *Filtr. Sep.,* 1996, vol. 33, 375
- **LICHT, W.** Air Pollution Control Engineering-basic calculations for particulate collection. Marcel Dekker, 1980
- **LIM, K.S. ; K.W. LEE ; M.R. KUHLMAN.** An experimental study of the performance factors affecting particle collection efficiency of the electrocyclone. *Aerosol Science and Technology,* 2001, vol. 35, 969-977
- **LIM, K.S. ; H.S. KIM ; K.W. LEE.** Comparative performances of conventional cyclones and a double cyclone with and withouit an electric field. *J. Aerosol Science,* 2004, vol. 35, 103-116
- **MOTHES, H. ; F. LOFFLER.** Prediction of particle removal in cyclone separators. *International Chemical Engineering,* 1988, vol. 28, 231-240
- **OGLESBY, S. JR. ; G.B. NICHOLS.** Electrostatic Precipitation. Marcel Dekker, Inc, 1978
- **PARKER, K.R.** Applied Electrostatic Precipitation. Blackie Academic & Professional, 1997
- Chemical separation in electrostatic precipitators. **SALCEDO, R.L.R.** Ph.D. Thesis. McGill University, 1981
- **SALCEDO, R.L. ; M.A. COELHO.** Turbulent Dispersion Coefficients in Cyclone Flow: an empirical approach. *Can. J. Chem. Eng.,* August 1999, 609-616
- **SALCEDO, R.L. ; M.J. PINHO.** Ciclones de muito elevada eficiência: da concepção à implementação industrial. *Ingenium,* September 2002, (79-82
- **SALCEDO, R.L. ; M.J. PINHO.** Pilot and Industrial-Scale Experimental Investigation of Numerically Optimized Cyclones. *Ind. Eng. Chem. Res.,* 2003, vol. 42 (1), 145-154
- **SALCEDO, R.L. ; M. DE SOUSA MENDES.** Captura de poeiras finas com ciclones optimizados: estudo de dois casos industriais. *Industria e Ambiente,* 2003, 18-22
- **SALCEDO, R.L.R. ; V. G. CHIBANTE ; I. SÔRO.** Laboratory, pilot and industrial-scale validation of numerically optimized reverse-flow gas cyclones. *Trans. of the Filt. Soc.,* 2004, vol. 4 (3), 220-225
- **SHRIMPTON, J.S. ; R.I. CRANE.** Small electrocyclone performance. *Chem. Eng. Technology,* 2001, vol. 24 (9), 951-955
- Industrial Electrostatic Precipitation. **WHITE, H.J.** International Society for Electrostatic Precipitation. Addison-Wesley Publ. Co, 1963